# EUROPEAN PATENT SPECIFICATION

(11) **EP 2 801 721 B1**
(45) Date of publication and mention of the grant of the patent: **29.06.2016**
(21) Application number: 13174308.0
(22) Date of filing: 28.06.2013
(51) Int. Cl.: F03D 1/06, F03D 80/40

(54) **Wind turbine blade and deicing method for the same**
Windturbinenrotorblatt und Enteisungsverfahren dafür
Pale d'éolienne et procédé de dégivrage de pale d'éolienne

(30) Priority: 09.05.2013 JP 2013099076
(43) Date of publication of application: 12.11.2014
(73) Proprietor: MITSUBISHI HEAVY INDUSTRIES, LTD., Tokyo 108-8215 (JP); I.R.C.A. S.p.a. Industria Resistenze Corazzate e Affini, 31020 San Vendemiano (Treviso) (IT)
(72) Inventor: Fujioka, Hideyasu, Tokyo, 108-8215 (JP); Sato, Kenji, Tokyo, 108-8215 (JP); Zoppas, Federico, 31020 San Vendemiano, Treviso (IT); Spagnolli, Filippo, 31020 San Vendemiano, Treviso (IT)
(74) Representative: Intès, Didier Gérard André

(56) References cited:
- CN-U- 202 673 585
- DE-A1- 19 644 355
- DE-A1-102010 051 292
- DE-A1-102010 051 293

## Description

### [Technical Field]

The present disclosure relates to a wind turbine blade provided with a deicing function to remove snow or ice adhered to a blade, and a deicing apparatus and a deicing method for the wind turbine blade.

### BACKGROUND ART

In recent years, wind turbine generators which generate electric power using wind in a form of renewable energy are becoming popular from the perspective of preserving the global environment. Generally, a wind turbine generator is configured so that a blade is rotatably supported via a hub by a nacelle provided atop a tower.

Wind turbine generators are often installed in a harsh environment such as offshore and mountainous regions and in a cold weather region, ice or snow (simply described as ice hereinafter) sometimes sticks to the blade. Particularly, when the wind turbine generator is in a stopped state and the blade is still, ice or snow tends to adhere to the blade without being shaken off from the blade. This causes adfreezing on the blade. The ice adhered to the blade can cause performance decline of the wind turbine generator and also interfere with a proper operation of the wind turbine generator. Therefore, a variety of deicing devices has been proposed to remove ice adhered to the blade.

For instance, Patent Literature 1 describes a deicing method for melting snow or ice adhered to the blade by circulating air heated by a heater in an interior space of the blade. In this method, an outflow path and an inflow path are formed using a shear web provided in the interior space of the blade as a strength member. Patent Literature 2 also proposes to provide an outflow passage and a return passage that are formed by tubes in an interior space on a leading edge side for the purpose of circulating the heated air in the interior space of the blade on the leading edge side.

Patent Literature 3 discloses a wind turbine blade according to the preamble of appended claim 1.

### [Citation List]

### [Patent Literature]

[PTL 1]
   WO 1997/06367
[PTL 2]
   US 2006/0018752
[PTL 3]
   DE 10 2010 051293 A1

### SUMMARY

### [Technical Problem]

There is a trend in recent years to use larger wind turbine generators from the perspective of improving power generation efficiency and the length of the blade increases accordingly. Thus, by circulating heated air throughout the interior space of the blade as proposed in Patent Literature 1, greater volume of heated air is used, thereby requiring larger heater and fan. Further, more energy is needed to heat the air and to circulate the air.

By making the blade longer, the blade increases in weight as well. The weight increase of the blade leads to load increase, net weight increase and cost increase. Therefore, it is desired to make a lighter blade. In this respect, according to Patent Literature 2, significant weight increase of the blade is inevitable as it is necessary to additionally provide two pipes inside the blade as the outflow passage and the return passage.

In view of the above issues, it is an object of the present invention is to provide a deicing apparatus for a wind turbine blade which is light in weight and which makes energy saving possible, a wind turbine blade having the deicing apparatus and a deicing method for a wind turbine blade.

### [Solution to Problem]

The present invention sets forth a wind turbine blade which is defined in appended claim 1. The wind turbine blade comprises an aerofoil part extending between a blade root part and a blade tip part, and a shear web provided in a longitudinal direction of the wind turbine blade to partition an interior space of the aerofoil part into a first space on a leading edge side and a second space on a trailing edge side, and a deicing apparatus comprising:
a pipe provided inside the first space and extending to a blade tip side region from a blade root side region in the first space, the pipe having a pipe opening disposed in the blade tip side region;
a circulation unit for forming a circulation flow of air in a circulation passage which includes a pipe-inner passage formed inside the pipe and a pipe-outer passage formed by a region outside the pipe in the first space and communicating with the pipe-inner passage via the pipe opening; and
a heated-air generation unit provided on a blade root part side and configured to heat the air flowing in the circulation passage so as to generate heated air, and
the circulation passage is configured to direct the heated air to the pipe-outer passage.

The deicing apparatus for the wind turbine blade is provided with the pipe inside the first space which is partitioned by the shear web. The pipe extends to the blade tip side region from the blade root side region and its pipe opening is disposed in the blade tip side region. With this configuration, the circulation passage is formed in the first space on the leading edge side, which includes the pipe-inner passage formed inside the pipe and the pipe-outer passage formed outside the pipe. The heated air generated by the heated-air generation unit is introduced to the pipe-outer passage via the circulation passage. When the heated air flows through the pipe-outer passage, the ice adhered to the leading edge of the aerofoil part is melted by the heat of the heated air and removed. In this manner, by utilizing the shear web installed as the strength member of the aerofoil part, the circulation passage for the heated air is formed by the pipe-inner passage inside the pipe and the pipe-outer passage outside the pipe, which are provided in the first space disposed on the leading edge side and are separated by the shear web. Therefore, compared to the case where two types of pipes (an outflow pipe and a return pipe) are installed from the blade root part to the blade tip part, the heated air can be circulated with a simple and light structure. As it is configured so that the heated air can be circulated in the first space (the pipe-inner passage and the pipe-outer passage) on the leading edge side which is partitioned by the shear web, it is possible to avoid size increase of the heated-air generation unit and the circulation unit, and also to save energy used for heating the air or for circulation the heated air. Moreover, the above deicing apparatus for the wind turbine blade can be achieved by installing the pipe, the heated-air generation unit and the circulation unit and thus, the deicing apparatus can be additionally provided in existing wind turbine blades without difficulties.

According to some embodiments, the above deicing apparatus further comprises an ejection part disposed in the blade root side region for ejecting the heated air generated in the heated-air generation unit to the blade root side region, and the pipe is configured to draw via the pipe opening the heated air having flown through the pipe-outer passage to the blade tip side region from the blade root side region and direct the drawn heated air as return air toward the heated-air generation unit via the pipe-inner passage, and a cross-sectional area of the pipe-outer passage decreases from the blade root side region toward the blade tip side region.

In the above embodiments, the heated air ejected to the blade root side region from the ejection part flows in the pipe-outer passage toward the blade tip side region. The cross-sectional area of the pipe-outer passage decreases from the blade root side region toward the blade tip side region while maintaining a smooth flow. Thus, the flow of the heated air is equalized and also the temperature of the heated air is equalized while the flow speed of the heated air is increased without generating flow separation or turbulence. As a result, the ice adhered to the leading edge side can be melted evenly.

According to some embodiments, the above deicing apparatus further comprises a communication passage provided in an accommodation space formed in the blade root part for communicating the pipe with the ejection part,
the heated-air generation unit includes a heater which is provided in the communication passage and accommodated in the accommodation space, and
the circulation unit includes a suction fan which is provided on an upstream side of the heater in the communication passage and accommodated in the accommodation space.

In the above embodiments, the heater for generating the heated air and the fan for circulating the heated air are placed in the accommodation space formed in the blade root part. The blade root part is larger in diameter than the blade tip side and it is easy to secure enough space to install the heater and the fan. Further, by arranging the heater and the fan in the blade root part which has relatively high strength in the wind turbine blade, it is possible to prevent strength reduction of the wind turbine blade.

According to the invention, the deicing apparatus further comprises a FRP plate which is provided in the blade root part and forms a borderline of the accommodation space on the blade tip part side.

As the borderline of the accommodation space on the blade tip part side by the FRP plate, it is possible to suppress weight increase of the wind turbine blade from formation of the accommodation space.

According to the invention, the above deicing apparatus further comprises a metal plate which is provided in the blade root part and forms a borderline of the accommodation space on the blade root part side.

According to some embodiments, the metal plate is attached between the blade root part of the wind turbine blade and a hub of a wind turbine generator to which the wind turbine blade is mounted.

With this configuration in which the metal plate for forming the borderline of the accommodation space on the blade root part side is provided in the blade root part, the accommodation space can be formed while achieving improved strength of the blade root part where the hub is connected.

According to some embodiments, the ejection part includes an ejection tube whose one end is connected to the communication passage and whose other end opens to the blade root side region of the first space, the ejection tube being shorter than the pipe, and
the first space communicates with the second space on the blade root part side with respect to a blade root side end of the shear web, and
the other end of the ejection tube is disposed on the blade tip part side with respect to the blade root side end of the shear web.

In the above embodiments, the ejection tube is used as the ejection part for ejecting the heated air to the pipe-outer passage. Further, the other end of the ejection tube which is on the side of the ejection tube where the heated air is injected is disposed on the blade tip part side with respect to the blade root side end of the shear web. As a result, flow disturbance of the heated air supplied to the pipe-outer passage from the ejection tube is suppressed and thus, the heated air can be reliably supplied to the pipe-outer passage.

According to some embodiments, a cross-sectional area of the pipe-inner passage is smaller than a cross-sectional area of the pipe-outer passage.

As a result, the heated air flows at low speed in the pipe-outer passage which contributes to ice removing, whereas the air flows at high speed in the pipe-inner passage. Thus, the flow time of the heated air is lengthened in the pipe-outer passage, which contributes to deicing, hence deicing effectively, whereas the flow time of the air is shortened in the pipe-inner passage, which does not directly contribute to ice removing, hence suppressing heat loss from the air.

According to some embodiments, the first space is separated by a leading edge side shear web from the second space disposed on the trailing edge side of the leading edge side shear web, the leading edge side shear web being the nearest to the leading edge among a plurality of the shear webs provided in the wind turbine blade.

By forming the circulation passage for the heated air in the first space separated by the leading edge side shear which is the nearest to the leading edge among the plurality of shear webs, the leading edge side which is prone to adhesion of ice can be effectively heated.

A wind turbine blade according to at least one embodiment of the present disclosure comprises:
an aerofoil part extending between a blade root part and a blade tip part;
a shear web provided in a longitudinal direction of the wind turbine blade to partition an interior space of the aerofoil part into a first space on a leading edge side and a second space on a trailing edge side; and
a deicing apparatus for removing ice attached to the leading edge, and
the deicing apparatus comprises: a pipe provided inside the first space and extending to a blade tip side region from a blade root side region in the first space, the pipe having a pipe opening disposed in the blade tip side region; a circulation unit for forming a circulation flow of air in a circulation passage which includes a pipe-inner passage formed inside the pipe and a pipe-outer passage formed by a region outside the pipe in the first space and communicating with the pipe-inner passage via the pipe opening; and a heated-air generation unit provided on a blade root part side and configured to heat the air flowing in the circulation passage so as to generate heated air, and
the circulation passage is configured to direct the heated air to the pipe-outer passage.

According to the above wind turbine blade, by utilizing the shear web installed as the strength member of the aerofoil part, the circulation passage for the heated air is formed by the pipe-inner passage inside the pipe and the pipe-outer passage outside the pipe, which are provided in the first space disposed on the leading edge side and are separated by the shear web. Therefore, compared to the case where two types of pipes (an outflow pipe and a return pipe) are installed from the blade root part to the blade tip part, the heated air can be circulated with a simple and light structure. As it is configured so that the heated air can be circulated in the first space (the pipe-inner passage and the pipe-outer passage) on the leading edge side which is partitioned by the shear web, it is possible to avoid size increase of the heated-air generation unit or the circulation unit, and also to prompt saving of energy used for heating the air or for circulation the heated air. Moreover, the above deicing apparatus for the wind turbine blade can be achieved by installing the pipe, the heated-air generation unit and the circulation unit and thus, it can be additionally provided in existing wind turbine blades without difficulties.

In some embodiments, a drain hole is also provided for discharging dew condensation water generated in the first space.

As a result, even when dew condensation water is generated in the wind turbine blade due to temperature decline of the heated air, the dew condensation water can be discharged from the drain hole.

A deicing method according to at least one embodiment of the present invention is defined in appended claim 10 and is for a wind turbine blade which comprises an aerofoil part extending between a blade root part and a blade tip part, and a shear web provided in a longitudinal direction of the wind turbine blade to partition an interior space of the aerofoil part into a first space on a leading edge side and a second space on a trailing edge side, and the deicing method comprises:
a circulation step of circulating air in a circulation passage including: a pipe-inner passage formed inside a pipe which extends in the first space from a blade root side region to a blade tip side region and which has a pipe opening disposed in the blade tip side region; and a pipe-outer passage formed in a region outside the pipe in the first space and communicating with the pipe-inner passage via the pipe opening; and
a heating step of heating the air in the circulation passage using a heated-air generation unit provided on the blade root part side, and
in the circulation step, heated air which is heated in the heating step is directed to the pipe-outer passage.

According to the above deicing method for the wind turbine blade, in the circulation step, the heated air is circulated in the first space (the pipe-inner passage and the pipe-outer passage) on the leading edge side partitioned by the shear web. Thus, it is possible to avoid size increase of the heated-air generation unit and the circulation unit, and also to save energy used for heating the air or for circulation the heated air. B utilizing the shear web installed as the strength member of the aerofoil part, the circulation passage for the heated air is formed by the pipe-inner passage inside the pipe and the pipe-outer passage outside the pipe, which are provided in the first space disposed on the leading edge side and are separated by the shear web. Therefore, the heated air can be circulated with a simple and light structure.

According to some embodiments, in the circulation step, the heated air is ejected to the blade root side region from an ejection part disposed in the blade root side region and the heated air having flown through the pipe-outer passage to the blade tip side region from the blade root side region is drawn from the pipe opening and directed as return air toward the heated-air generation unit via the pipe-inner passage.

As a result, the heated air can be circulated smoothly within the first space in the circulation step.

According to some embodiments, the ejection part includes an ejection tube whose one end is connected to the pipe via a communication passage and whose other end opens to the blade root side region of the first space,
the first space communicates with the second space on a side nearer to the blade root than a blade-root-side end of the shear web, and
in the circulation step, the heated air is ejected to the pipe-outer passage from the other end of the ejection tube, the other end of the ejection tube being disposed on a side nearer to the blade tip than the blade-root-side end of the shear web.

In the above embodiments, the ejection tube is used as the ejection part for ejecting the heated air to the pipe-outer passage. Further, the other end of the ejection tube which is on the side of the ejection tube where the heated air is injected is disposed on the blade tip part side with respect to the blade root side end of the shear web. As a result, flow disturbance of the heated air supplied to the pipe-outer passage from the ejection tube is suppressed and thus, the heated air can be reliably supplied to the pipe-outer passage.

According to some embodiments, the above deicing method further comprises a draining step of draining dew condensation water generated in the first space in the circulation step from a drain hole formed in the wind turbine blade.

As a result, even when dew condensation water is generated in the wind turbine blade due to temperature decline of the heated air, the dew condensation water can be discharged from the drain hole.

### [Advantageous Effects]

According to at least one embodiment of the present invention, by utilizing the shear web installed as the strength member of the aerofoil part, the circulation passage for the heated air is formed by the pipe-inner passage inside the pipe and the pipe-outer passage outside the pipe, which are provided in the first space disposed on the leading edge side and are separated by the shear web. Therefore, compared to the case where two types of pipes (an outflow pipe and a return pipe) are installed from the blade root part to the blade tip part, the heated air can be circulated with a simple and light structure. As it is configured so that the heated air can be circulated in the first space (the pipe-inner passage and the pipe-outer passage) on the leading edge side which is partitioned by the shear web, it is possible to avoid size increase of the heated-air generation unit or the circulation unit, and also to prompt saving of energy used for heating the air or for circulation the heated air. Moreover, the above deicing apparatus for the wind turbine blade can be achieved by installing the pipe, the heated-air generation unit and the circulation unit and thus, it can be additionally provided in existing wind turbine blades without difficulties.

### BRIEF DESCRIPTION OF DRAWINGS

[FIG.1] FIG.1 is an illustration of a configuration example of a wind turbine generator.
[FIG.2] FIG.2 is a cross-sectional view of a configuration example of an interior space of a wind turbine blade according to an embodiment.
[FIG.3] FIG.3 is a cross-sectional view taken along line A-A of FIG.2.
[FIG.4] FIG.4 is a schematic illustration of a device configuration of the wind turbine blade on a blade root part side according to an embodiment.
[FIG.5] FIG.5 is a perspective view of the wind turbine blade on a blade tip part side according to an embodiment.

### DETAILED DESCRIPTION

Embodiments of the present invention will now be described in detail with reference to the accompanying drawings. It is intended, however, that unless particularly specified in these embodiments, dimensions, materials, shape, its relative positions and the like shall be interpreted as illustrative only and not limitative of the scope of the present invention.

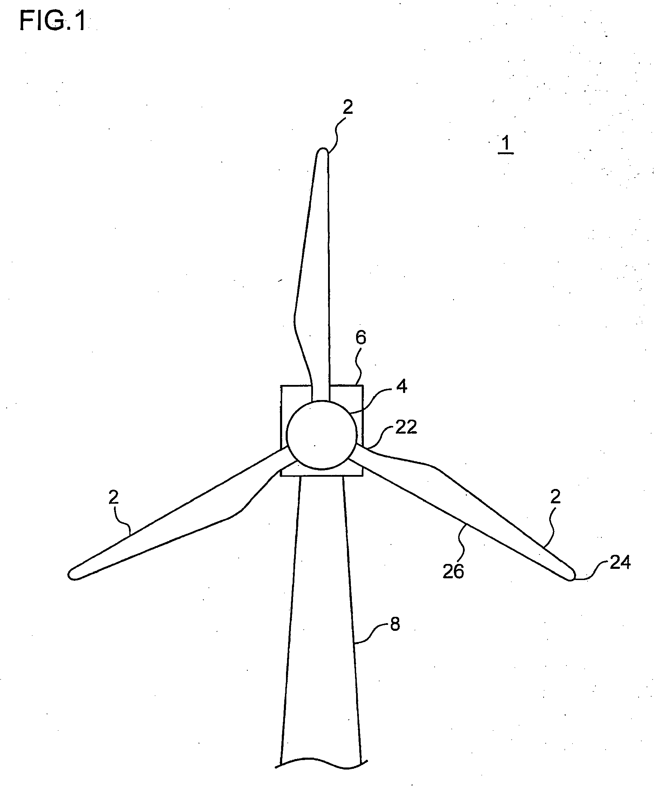

FIG.1 is an illustration of a configuration example of a wind turbine generator.

As illustrated in FIG.1, a wind turbine generator 1 is provided with at least one wind turbine blade 2 (three blades in this example), a hub 4 to which the wind turbine blades 2 are attached, a nacelle 6 for supporting a rotor including the blades 2 and the hub 4, and a tower 8 for supporting the nacelle 6 free of turning. Rotation of the rotor is inputted to a generator (not shown) and electric power is generated by the generator.

In one embodiment, the wind turbine blades (blades) 2 are attached to the hub 4 free of rotation around a blade axis, and a pitch angle of the blade 2 is adjustable using a pitch drive mechanism. Normally, a power source of the pitch drive mechanism is placed in the hub 4 or the nacelle 6. The tower 8 is installed on a base. The base is in stalled on the ground in the case of an onshore wind turbine generator, whereas the base is installed on the sea in the case of an offshore wind turbine generator. Further, the wind turbine generator 1 according to this embodiment is applicable to both onshore wind turbine generators and offshore wind turbine generators.

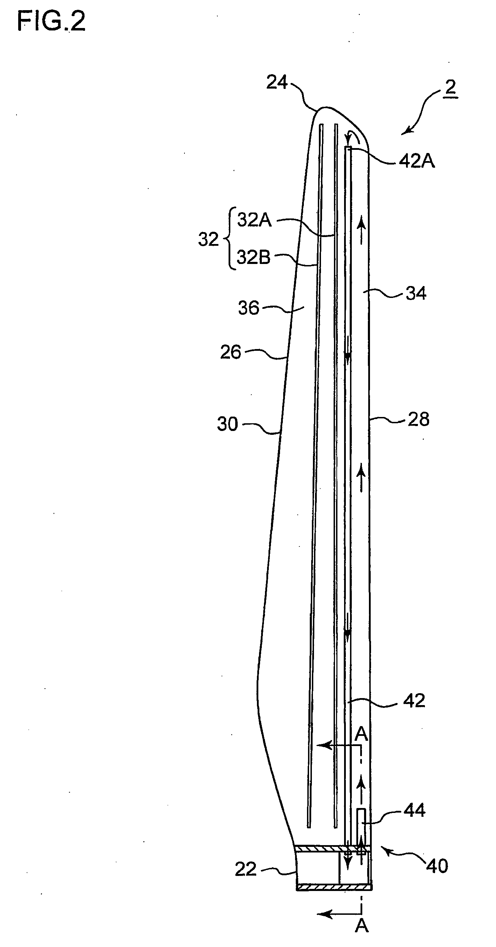

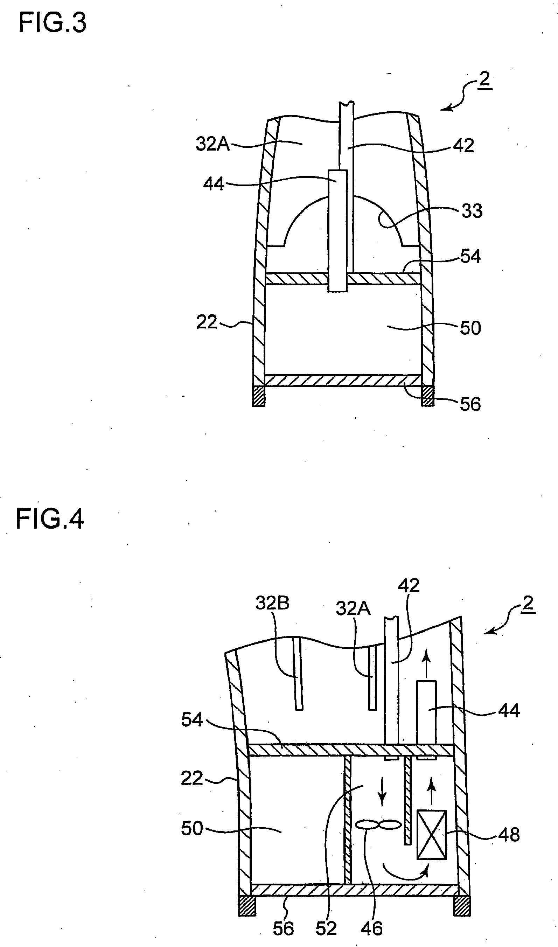

In reference to FIG.2 to FIG.4, a configuration of the blade 3 according to one embodiment of the present invention is described. FIG.2 is a cross-sectional view of a configuration example of an interior space of a wind turbine blade according to an embodiment. FIG.3 is a cross-sectional view taken along line A-A of FIG.2. FIG.4 is a schematic illustration of a device configuration of the wind turbine blade on a blade root part side according to an embodiment.

As illustrated in FIG.2, the blade 2 includes a blade root part 22 connected to the hub 4 (see FIG.1), a blade tip part 24 and an aerofoil part 26 disposed between the blade root part 22 and the blade tip part 24. The blade 3 has a long shape extending from the blade root part 22 to the blade tip part 24. The aerofoil part 26 has a leading edge 28 and a trailing edge 30.

In an interior space of the blade 2, a shear web 32 is provided extending in the longitudinal direction of the blade 2. The shear web 32 is arranged to connect a pressure side and a suction side of the aerofoil part 26 and functions as a strength member of the blade 2. For instance, the shear web 32 includes a shear web 32A arranged on the leading edge 28 side and a shear web 32B arranged on the trailing edge 30 side. The distance between the shear web 32A on the leading edge 28 side and the shear web 32B on the trailing edge 30 side may be constant or different depending on a position in the longitudinal direction of the blade 2. For instance, the distance may vary in accordance with a chord length of the aerofoil part 26.

The interior space of the blade 2 is separated by the shear web 32 into a first space 34 on the leading edge 28 side and a second space 36 on the trailing edge 30 side. As illustrated in FIG.2, in the case where a plurality of shear webs is provided, including the sear web 32A disposed on the leading edge 28 side and the shear web 32B disposed on the trailing edge 30 side, the first space 34 is the space on the leading edge 28 side that is partitioned by the shear web 32A disposed nearest to the leading edge 28 among a plurality of the shear webs.

The shear web 32 (32A, 32B) may be arranged so as to form a gap between the end of the shear web 32 on the blade tip side and the blade tip 24 as illustrated in FIG.2. In this case, the first space 34 and the second space 36 communicate with each other on the blade tip part 24 side with respect to the blade tip side end of the shear web 32. Similarly, the shear web 32 (32A, 32B) may be arranged, as illustrated in FIG.2 to FIG.4, so as to form a gap between a blade root side end of the shear web 32 and the blade root part 22. In this case, the first space 34 and the second space 36 communicate with each other on the blade root part 22 side with respect to the blade root side end of the shear web 32.

The wind turbine blade 2 having the above configuration is further provided with a deicing apparatus 40 for removing snow or ice (referred to as ice hereinafter) adhered to the leading edge 28 side of the blade 3.

As illustrated in FIG.2 to FIG.4, in some embodiments, the deicing unit 40 is provided with a pipe 42 extending in the first space 34, an ejection tube 44 provided in a blade root side region, and a circulation unit and a heated-air generation unit that are provided in the blade root part 22.

In one embodiment, the circulation unit includes a suction fan 46 and the heated-air generation unit includes a heater 48.

The pipe 42 is arranged in the first space 34 and extends to a blade tip side region from the blade root side region in the first space 344. The pipe 42 has a pipe opening 42A disposed in the blade tip side region of the first space 34. Inside the pipe 42, a pipe-inner passage is formed. Outside the pipe 42, a pipe-outer passage is formed. The pipe-outer passage is formed by a region outside the pipe 42 in the first space 34 and is configured to communicate with the pipe-inner passage via the pipe opening 42A.

The ejection tube 44 is shorter than the pipe 42. One end of the ejection tube 44 is connected to a communication passage 52 (see FIG.4) which is described later and the other end of the ejection tube 44 opens to the first space 34. The ejection tube 44 is configured to eject heated air generated by the heater 48 to the blade root side region from the other end that opens to the first space 34. In the case where the blade root side end of the shear web 32 does not contact the blade root part 22 and there is a gap between the blade root side end of the shear web 32 and the blade root part 22, the other end of the of the ejection tube 44 is disposed on the blade tip part 24 side with respect to the blade root side end of the shear web 32. For instance, in the case where a notch 33 is provided at the blade root side end of the shear web 32A as illustrated in FIG.3, the other end of the ejection tube 44 is disposed on the blade tip part 24 side with respect to the notch 33. As a result, flow disturbance of the heated air supplied to the pipe-outer passage from the ejection tube 44 is suppressed and thus, the heated air can be reliably supplied to the pipe-outer passage.

In one embodiment, an accommodation space 50 is formed in the blade root part 22. The accommodation space 50 may be formed by the aerofoil part 26 on the blade root part side, a FRP plate 54 forming a borderline on the blade tip part 24 side and a metal plate 56 forming a borderline on the blade root part 22 side. In this case, from the perspective of improving strength of the blade root part 22, the metal plate 56 may be attached between the hub 4 and the blade root part 22.

In the accommodation space 50, a communication passage 52 is provided. The communication passage 52 is configured to communicate the blade root part 22 side end of the pipe 42 with the blade root part 22 side end of the ejection tube 44. In the communication passage 52, the suction fan 46 as the circulation unit and the heater 48 as the heated-air generation unit are arranged. The suction fan 46 may be arranged on an upstream side of the heater 48. Further, a circulation unit including a forced draft fan instead of the suction fan 46 may be used. The air (return air) drawn by the suction fan 46 from the pipe-inner passage to the communication passage 52 is heated in the communication passage 52 by the heater 48 and then ejected as the heated air from the ejection tube 44 to the pipe-outer passage. Normally, the blade root part 22 is larger in diameter than the blade tip part 24 and thus, it is easy to secure enough space to install the heater 48, the suction fan 46 or the like. By arranging the heater 48 and the suction fan 46 in the blade root part 22 which has relatively high strength in the blade 2, it is possible to prevent strength reduction of the blade 2.

As a power source of the suction fan 46 or the heater 48, a power source of the pitch drive mechanism of the blade 3 may be used. The deicing apparatus 40 of this embodiment is configured to circulate the heated air only in the first space 34 on the leading edge 28 side of the interior space of the blade 2. Thus, a circulation volume of the air can be reduced and this makes it possible to supply the power needed for the suction fan 46 or the heater 48 from the power source of the pitch drive mechanism. As the power source of the suction fan 46 or the heater 48, a separate power source may be provided or an existing power source other than the power source of the pitch drive mechanism may be used.

With the above configuration, a circulation passage is formed in the first space 34 on the leading edge 28 side, which includes the pipe-inner passage formed inside the pipe 42 and the pipe-outer passage formed outside the pipe 42. The heated air generated by the heater 48 is introduced to the pipe-outer passage via the pipe-inner passage. When the heated air flows through the pipe-outer passage, the ice adhered to the leading edge 28 of the aerofoil part 26 is melted by the heat of the heated air and removed. In this manner, by utilizing the shear web 32 (32A, 32B) installed as the strength member of the aerofoil part 26, the circulation passage for the heated air is formed by the pipe-inner passage inside the pipe 42 and the pipe-outer passage outside the pipe 42, which are provided in the first space 34 disposed on the leading edge 28 side and are separated by the shear web 32. Therefore, compared to the case where two types of pipes (an outflow pipe and a return pipe) are installed from the blade root part 22 to the blade tip part 24, the heated air can be circulated with a simple and light structure. As it is configured so that the heated air can be circulated in the first space 34 (the pipe-inner passage and the pipe-outer passage) on the leading edge 28 side which is partitioned by the shear web 32, it is possible to avoid size increase of the heated-air generation unit or the circulation unit, and also to save energy used for heating the air or for circulation the heated air.

In one embodiment, the cross-sectional area of the pipe-inner passage is smaller than that of the pipe-outer passage. As a result, the heated air flows at low speed in the pipe-outer passage which contributes to ice removing, whereas the air flows at high speed in the pipe-inner passage. Thus, the flow time of the heated air is lengthened in the pipe-outer passage, which contributes to deicing, hence removing ice effectively, whereas the flow time of the air is shortened in the pipe-inner passage, which does not directly contribute to ice removing, hence suppressing heat loss from the air.

In another embodiment, the blade 2 may be configured so that the heated air generated in the heater 48 flows to the blade tip side region from the blade root side region through the pipe-inner passage (return passage), is discharged to the pipe-outer passage via the pipe opening 42A, and then flows in the pipe-outer passage from the blade tip side region to the blade root side region. In this case, the ice adhered to the leading edge 28 of the aerofoil part 26 is melted by the heat of the heated air and removed when the heated air flows in the pipe-outer passage from the blade tip side region to the blade root side region.

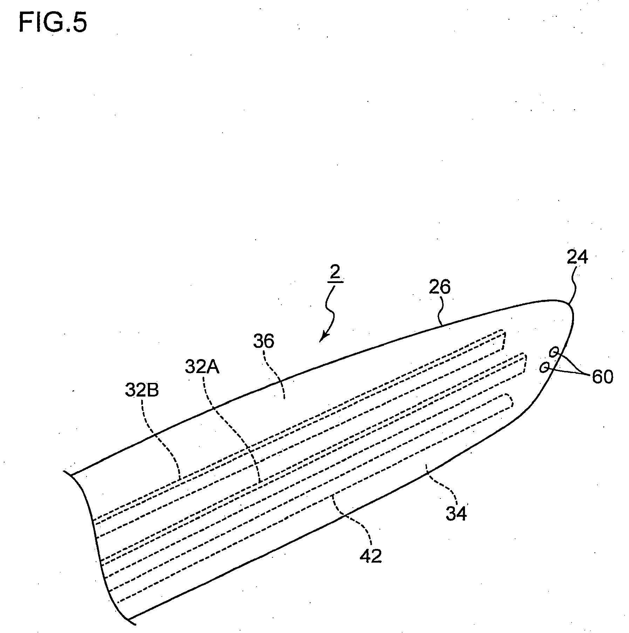

As illustrated in FIG.5, in some embodiments, at least one drain hole 60 is provided to drain dew condensation water generated in the first space 34. FIG.5 is a perspective view of the wind turbine blade on the blade tip part side according to an embodiment.

In one embodiment, the drain hole 60 is formed on the blade tip part 24 side in the aerofoil part 36 and allows communication between the first space 34 and the outside. A plurality of drain holes 60 may be provided. As a result, even when dew condensation water is generated in the blade 2 due to temperature decline of the heated air, the dew condensation water can be discharged from the drain holes 60. Further, when circulating the heated air using the deicing apparatus 40, the drain hole 60 has a diameter small enough to prevent the heated air from leaking through the drain hole 60 in large amounts while allowing drain water (dew condensation water) to be drained through the drain hole 60. Further, the drain hole 60 may be configured sealable so that, when not draining the drain water, the drain hole 60 can be sealed by a cover (not shown).

For instance, when the drain water is accumulated in the first space 34, the rotor is rotated so that the blade 2 which is to be drained is positioned such that its blade tip part 24 is on the lower side. This causes the drain water accumulated in the first space 34 to flow downward in the first space 34 toward the blade tip part 24 and the drain water can be discharged to the outside of the blade 2 from the drain hole 60. Alternatively, when the drain water is accumulated in the first space 34, the drain water may be collected on the blade tip part 24 side in the first space 34 using the centrifugal force generated when rotating the rotor and then the drain water may be discharged from the drain hole 60. Further, the drain hole 60 may be provided near the center of the aerofoil part 26 in the longitudinal direction of the blade 2, or may be provided on the blade root side 22.

The deicing method for the blade 2 according to one embodiment is now explained. The explanation is made using the reference numerals indicated in FIG.1 to FIG.5.

The deicing method for the blade 2 according to one embodiment includes a circulation step of circulating the air in the circulation passage including the pipe-inner passage and the pipe-outer passage by driving the suction fan 46, and a heating step of heating the air in the circulation passage using the heater 48. The circulation step and the heating step may be performed simultaneously or separately.

In the circulation step, the heated air heated in the heating step is introduced to the pipe-outer passage. In the circulation step, it may be configured so that the heated air is ejected to the blade root side region from the ejection tube 44 disposed in the blade root side region, the heated air having flow to the blade tip side region from the blade root side region through the pipe-outer passage is drawn in from the pipe opening 42A and then the heated air is introduced as return air through the pipe-inner passage toward the heater 48. As a result, the heated air can be circulated smoothly in the first space 34 in the circulation step.

In one embodiment, the deicing method for the blade 3 further includes a draining step of draining dew condensation water generated in the first space 34 in the circulation step from the drain hole 60 formed in the blade 2. As a result, even when there is dew condensation water in the blade 2, the dew condensation water can be smoothly discharged from the drain hole 60.

The timing for performing the deicing may be before starting the operation of the wind turbine generator 1. When operation of the wind turbine generator 1 is stopped for maintenance, etc., the blade 2 is still and thus, ice tends to adhere to the blade 2 without being shaken off from the blade 2. If the wind turbine generator 1 is started in such a state that the ice is still on the blade, it might cause performance drop of the wind turbine generator 1 or interfere with a proper operation of the wind turbine generator 1. Therefore, by performing the deicing before starting the operation of the wind turbine generator, it is possible to maintain performance of the wind turbine generator 1 high and also to operate the wind turbine generator 1 smoothly.

As described above, according to the above embodiments, by utilizing the shear web 32 (32A, 32B) installed as the strength member of the aerofoil part 26, the circulation passage for the heated air is formed by the pipe-inner passage inside the pipe 42 and the pipe-outer passage outside the pipe 42, which are provided in the first space 34 disposed on the leading edge 28 side and are partitioned by the shear web 32. Therefore, compared to the case where two types of pipes 42 (an outflow pipe and a return pipe) are installed from the blade root part 22 to the blade tip part 24, the heated air can be circulated with a simple and light structure. As it is configured so that the heated air can be circulated in the first space 34 (the pipe-inner passage and the pipe-outer passage) on the leading edge 28 side which is partitioned by the shear web 32, it is possible to avoid size increase of the heated-air generation unit (including the heater 48) or the circulation unit (including the suction fan 36), and also to save energy used for heating the air or for circulation the heated air. Moreover, the deicing apparatus 40 for the wind turbine blade 2 can be achieved by installing the pipe 42, the heated-air generation unit and the circulation unit and thus, the deicing apparatus 40 can be additionally provided in existing wind turbine blades without difficulties.

While the embodiments of the present invention have been described, it is obvious to those skilled in the art that various changes and modifications may be made without departing from the scope of the invention.

For instance, in the above embodiments, the ejection tube 44 is used as an example of the ejection part for ejecting the heated air to the pipe-outer passage. This is, however, not imitative and the ejection part may be a nozzle for ejecting the heated air or may be a hole for communicating the communication passage 52 with the pipe-outer passage.

In the above embodiments, the heater 48 using a power source is used as an example of the heated-air generation unit. This is, however, not limitative and a heat exchanger may be used as the heated-air generation unit to heat the return air by heat exchange with a heat medium.

### [Reference Signs list]

- 1: Wind turbine generator
- 2: Wind turbine blade (Blade)
- 4: Hub
- 6: Nacelle
- 8: Tower
- 22: Blade root part
- 24: Blade tip part
- 26: Aerofoil part
- 28: Leading edge
- 30: Trailing
- 32, 32A, 32B: Shear web
- 33: Notch
- 34: First space
- 36: Second space
- 40: Deicing apparatus
- 42: Pipe
- 42A: Pipe opening
- 44: Ejection tube
- 46: Suction fan
- 48: Heater
- 50: Accommodation space
- 52: Communication passage
- 54: FRP plate (i.e. fiberglass-reinforced plastic plate)
- 56: Metal plate
- 60: Drain hole

## Claims

1. A wind turbine blade, comprising:
an aerofoil part (26) extending between a blade root part (22) and a blade tip part (24);
a shear web (32) provided in a longitudinal direction of the wind turbine blade (2) to partition an interior space of the aerofoil part (26) into a first space (34) on a leading edge side and a second space (36) on a trailing edge side; and
a deicing apparatus for removing ice attached to the leading edge (28), wherein the deicing apparatus comprises:
a pipe (42) provided inside the first space (34) and extending to a blade tip side region from a blade root side region in the first space (34), the pipe having a pipe opening (42A) disposed in the blade tip side region;
a circulation unit for forming a circulation flow of air in a circulation passage which includes a pipe-inner passage formed inside the pipe (42) and a pipe-outer passage formed by a region outside the pipe (42) in the first space (34) and communicating with the pipe-inner passage via the pipe opening (42A);
a heated-air generation unit provided on a blade root part side and configured to heat the air flowing in the circulation passage so as to generate heated air; and
an ejection tube (44) which is provided in the blade root side region, the ejection tube (44) being shorter than the pipe (42) and having one end opening to the first space (34) and being configured to eject the heated air from said one end;
wherein the circulation passage is configured to direct the heated air to the pipe-outer passage,
wherein an accommodation space (50) is formed in the blade root part (22), the accommodation space (50) accommodating the circulating unit and the heated-air generation unit,
wherein the accommodation space (50) includes a communication passage (52) for communicating a blade root side end of the pipe (42) with a blade root side end of the ejection tube (44),
the wind turbine blade being **characterized in that** the accommodation space (50) is formed by the aerofoil part (26) on the blade root side, a FRP plate (54) which defines a borderline on the blade tip side, and a metal plate (56) which forms a borderline on the blade root side.

2. The wind turbine blade according to claim 1,
wherein the pipe (42) is configured to draw via the pipe opening (42A) the heated air having flown through the pipe-outer passage to the blade tip side region from the blade root side region and direct the drawn heated air as return air toward the heated-air generation unit via the pipe-inner passage, and
wherein a cross-sectional area of the pipe-outer passage decreases from the blade root side region toward the blade tip side region.

3. The wind turbine blade according to claim 2, further comprising:
a communication passage (52) provided in an accommodation space (50) formed in the blade root part (22) for communicating the pipe (42) with the ejection tube (44),
wherein the heated-air generation unit includes a heater (48) which is provided in the communication passage (52) and accommodated in the accommodation space (50), and
wherein the circulation unit includes a suction fan (46) which is provided on an upstream side of the heater (48) in the communication passage (52) and accommodated in the accommodation space (50).

4. The wind turbine blade according to claim 3,
wherein the metal plate (56) is attached between the blade root part (22) of the wind turbine blade (2) and a hub (4) of a wind turbine generator to which the wind turbine blade (2) is mounted.

5. The wind turbine blade according to claim 3 or claim 4,
wherein said one end of the ejection tube (44) opens to the blade root side region of the first space (34) and the other end of the ejection tube (44) is connected to the communication passage (52),
wherein the first space (34) communicates with the second space (36) on the blade root part side with respect to a blade root side end of the shear web (32), and
wherein said one end of the ejection tube (44) is disposed on the blade tip part side with respect to the blade root side end of the shear web (32).

6. The wind turbine blade according to claim 5,
wherein a notch (33) is provided at the blade root side end of the shear web (32), and
wherein said one end of the ejection tube (44) is disposed on the blade tip part side with respect to the notch (33).

7. The wind turbine blade according to any one of claims 1 to 6,
wherein a cross-sectional area of the pipe-inner passage is smaller than a cross-sectional area of the pipe-outer passage.

8. The wind turbine blade according to any one of claims 1 to 7,
wherein the first space (34) is separated by a leading edge side shear web from the second space disposed on the trailing edge side of the leading edge side shear web, the leading edge side shear web (32A) being the nearest to the leading edge (28) among a plurality of the shear webs (32A, 32B) provided in the wind turbine blade (2).

9. The wind turbine blade according to any one of claims 1 to 8, further comprising:
a drain hole (60) for discharging dew condensation water generated in the first space (34).

10. A deicing method for a wind turbine blade which comprises an aerofoil part (26) extending between a blade root part and a blade tip part, and a shear web (32) provided in a longitudinal direction of the wind turbine blade (2) to partition an interior space of the aerofoil part (26) into a first space (34) on a leading edge side and a second space (36) on a trailing edge side, the deicing method comprising:
a circulation step of circulating air in a circulation passage including: a pipe-inner passage formed inside a pipe (42) which extends in the first space (34) from a blade root side region to a blade tip side region and which has a pipe opening (42A) disposed in the blade tip side region; and a pipe-outer passage formed in a region outside the pipe (42) in the first space (34) and communicating with the pipe-inner passage via the pipe opening (42A); and
a heating step of heating the air in the circulation passage using a heated-air generation unit provided on the blade root part side,
wherein, in the circulation step, heated air which is heated in the heating step is ejected from one end of an ejection tube (44) and directed to the pipe-outer passage, the ejection tube (44) being provided in the blade root side region and being shorter than the pipe (42), said one end of the ejection tube (44) opening to the first space (34),
wherein an accommodation space (50) including a communication passage (52) for communicating a blade root side end of the pipe (42) with a blade root side end of the ejection tube (44) is formed in the blade root part by the aerofoil part (26) on the blade root side, a FRP plate (54) which defines a borderline on the blade tip side, and a metal plate (56) which forms a borderline on the blade root side,
wherein, in the circulation step, the air is circulated in the circulation passage by a circulating unit accommodated in the accommodation space (50), and
wherein, in the heating step, the heated air is generated by a heated-air generation unit accommodated in the accommodation space (50).

11. The deicing method for the wind turbine blade according to claim 10,
wherein, in the circulation step, the heated air is ejected to the blade root side region from an ejection part disposed in the blade root side region and the heated air having flown through the pipe-outer passage to the blade tip side region from the blade root side region is drawn from the pipe opening (42A) and directed as return air toward the heated-air generation unit via the pipe-inner passage.

12. The deicing method for the wind turbine blade according to claim 10 or 11,
wherein said one end of the ejection tube (44) opens to the blade root side region of the first space (34) and the other end of the ejection tube (44) is connected to the pipe (42) via the communication passage (52),
wherein the first space (34) communicates with the second space (36) on a side nearer to the blade root than a blade root side end of the shear web, and
wherein, in the circulation step, the heated air is ejected to the pipe-outer passage from said one end of the ejection tube (44), said one end of the ejection tube (44) being disposed on a side nearer to the blade tip (24) than the blade root side end of the shear web (32).

13. The deicing method for the wind turbine blade according to any one of claims 10 to 12, further comprising:
a draining step of draining dew condensation water generated in the first space (34) in the circulation step from a drain hole (60) formed in the wind turbine blade (2).

## Patentansprüche

1. Windturbinenflügel, umfassend:
einen Flügelprofilteil (26), der sich zwischen einem Flügelwurzelteil (22) und einen Flügelspitzenteil (24) erstreckt,
einen Schersteg (32), der in einer Längsrichtung des Windturbinenflügels (2) angeordnet ist, um einen Innenraum des Flügelprofilteils (26) in einen ersten Raum (34) auf einer Vorderkantenseite und einen zweiten Raum (36) auf einer Hinterkantenseite aufzuteilen, und
eine Enteisungsvorrichtung zum Entfernen von Eis, das sich an der Vorderkante (28) gebildet hat, wobei die Enteisungsvorrichtung umfasst:
eine Röhre (42), die innerhalb des ersten Raumes (34) angeordnet ist und sich von einer Flügelwurzelseitenregion in dem ersten Raum (34) zu einer Flügelspitzenseitenregion erstreckt, wobei die Röhre eine Röhrenöffnung (42A) aufweist, die in der Flügelspitzenseitenregion angeordnet ist,
eine Zirkulationseinheit zum Bilden einer Luftzirkulationsströmung in einem Zirkulationskanal, der einen röhreninnenseitigen Kanal enthält, der im Inneren der Röhre (42) ausgebildet ist, und einen röhrenaußenseitigen Kanal enthält, der durch eine Region außerhalb der Röhre (42) in dem ersten Raum (34) ausgebildet ist und mit dem röhreninnenseitigen Kanal über die Röhrenöffnung (42A) in Strömungsverbindung steht,
eine Warmlufterzeugungseinheit, die auf einer Flügelwurzelteilseite angeordnet ist und dafür konfiguriert ist, die in dem Zirkulationskanal strömende Luft zu erwärmen, um erwärmte Luft zu erzeugen, und
ein Ausstoßrohr (44), das in der Flügelwurzelseitenregion angeordnet ist, wobei das Ausstoßrohr (44) kürzer als die Röhre (42) ist und ein Ende aufweist, das zu dem ersten Raum (34) hin öffnet und das dafür konfiguriert ist, die erwärmte Luft von dem einen Ende auszustoßen,
wobei der Zirkulationskanal dafür konfiguriert ist, die erwärmte Luft zu dem röhrenaußenseitigen Kanal zu leiten,
wobei ein Aufnahmeraum (50) in dem Flügelwurzelteil (22) ausgebildet ist, wobei der Aufnahmeraum (50) die Zirkulationseinheit und die Warmlufterzeugungseinheit aufnimmt,
wobei der Aufnahmeraum (50) einen Strömungsverbindungskanal (52) enthält, der ein Flügelwurzelseitenende der Röhre (42) mit einem Flügelwurzelseitenende des Ausstoßrohres (44) in Strömungsverbindung bringt,
wobei der Windturbinenflügel **dadurch gekennzeichnet ist, dass** der Aufnahmeraum (50) durch den Flügelprofilteil (26) auf der Flügelwurzelseite, eine FRP-Platte (54), die eine Grenze auf der Flügelspitzenseite definiert, und eine Metallplatte (56), die eine Grenze auf der Flügelwurzelseite bildet, gebildet wird.

2. Windturbinenflügel nach Anspruch 1,
wobei die Röhre (42) dafür konfiguriert ist, die erwärmte Luft, die durch den röhrenäußeren Kanal von der Flügelwurzelseitenregion zu der Flügelspitzenseitenregion geströmt ist, über die Röhrenöffnung (42A) anzusaugen und die angesaugte erwärmte Luft als Rückströmluft über den röhreninnenseitigen Kanal zu der Warmlufterzeugungseinheit zu leiten, und
wobei eine Querschnittsfläche des röhrenäußeren Kanals von der Flügelwurzelseitenregion zu der Flügelspitzenseitenregion kleiner wird.

3. Windturbinenflügel nach Anspruch 2, ferner umfassend:
einen Strömungsverbindungskanal (52), der in einem Aufnahmeraum (50) angeordnet ist, welcher in dem Flügelwurzelteil (22) ausgebildet ist, um eine Strömungsverbindung zwischen der Röhre (42) und dem Ausstoßrohr (44) herzustellen,
wobei die Warmlufterzeugungseinheit eine Heizung (48) enthält, die in dem Strömungsverbindungskanal (52) angeordnet und in dem Aufnahmeraum (50) aufgenommen ist, und
wobei die Zirkulationseinheit ein Ansauggebläse (46) enthält, das auf einer stromaufwärtigen Seite der Heizung (48) in dem Strömungsverbindungskanal (52) angeordnet ist und in dem Aufnahmeraum (50) aufgenommen ist.

4. Windturbinenflügel nach Anspruch 3,
wobei die Metallplatte (56) zwischen dem Flügelwurzelteil (22) des Windturbinenflügels (2) und einer Nabe (4) eines Windturbinengenerators, an der der Windturbinenflügel (2) montiert ist, angebracht ist.

5. Windturbinenflügel nach Anspruch 3 oder Anspruch 4,
wobei das eine Ende des Ausstoßrohres (44) zu der Flügelwurzelseitenregion des ersten Raumes (34) hin öffnet und das andere Ende des Ausstoßrohres (44) mit dem Strömungsverbindungskanal (52) verbunden ist,
wobei der erste Raum (34) mit dem zweiten Raum (36) auf der Flügelwurzelteilseite mit Bezug auf ein Flügelwurzelseitenende des Schersteges (32) in Strömungsverbindung steht, und
wobei das eine Ende des Ausstoßrohres (44) auf der Flügelspitzenteilseite mit Bezug auf das Flügelwurzelseitenende des Schersteges (32) angeordnet ist.

6. Windturbinenflügel nach Anspruch 5,
wobei eine Aussparung (33) am Flügelwurzelseitenende des Schersteges (32) angeordnet ist, und
wobei das eine Ende des Ausstoßrohres (44) auf der Flügelspitzenteilseite mit Bezug auf die Aussparung (33) angeordnet ist.

7. Windturbinenflügel nach einem der Ansprüche 1 bis 6,
wobei eine Querschnittsfläche des röhreninnenseitigen Kanals kleiner ist als eine Querschnittsfläche des röhrenäußeren Kanals.

8. Windturbinenflügel nach einem der Ansprüche 1 bis 7,
wobei der erste Raum (34) durch einen vorderkantenseitigen Schersteg von dem zweiten Raum, der auf der Hinterkantenseite des vorderkantenseitigen Schersteges angeordnet ist, getrennt ist, wobei der vorderkantenseitige Schersteg (32A) unter mehreren Scherstegen (32A, 32B), die in dem Windturbinenflügel (2) angeordnet sind, der Vorderkante (28) am nächsten liegt.

9. Windturbinenflügel nach einem der Ansprüche 1 bis 8, ferner umfassend:
ein Dränageloch (60) zum Abfließen von Taukondensationswasser, das sich in dem ersten Raum (34) gebildet hat.

10. Enteisungsverfahren für einen Windturbinenflügel, der einen Flügelprofilteil (26) umfasst, der sich zwischen einem Flügelwurzelteil und einem Flügelspitzenteil erstreckt, und einen Schersteg (32) umfasst, der in einer Längsrichtung des Windturbinenflügels (2) angeordnet ist, um einen Innenraum des Flügelprofilteils (26) in einen ersten Raum (34) auf einer Vorderkantenseite und einen zweiten Raum (36) auf einer Hinterkantenseite aufzuteilen, das Enteisungsverfahren umfassend:
einen Zirkulierungsschritt zum Zirkulieren von Luft in einem Zirkulationskanal, enthaltend: einen röhreninneren Kanal, der im Inneren einer Röhre (42) ausgebildet ist, die sich in dem ersten Raum (34) von einer Flügelwurzelseitenregion zu einer Flügelspitzenseitenregion erstreckt und die eine Röhrenöffnung (42A) aufweist, die in der Flügelspitzenseitenregion angeordnet ist, und einen röhrenäußeren Kanal, der in einer Region außerhalb der Röhre (42) in dem ersten Raum (34) ausgebildet ist und mit dem röhreninnenseitigen Kanal über die Röhrenöffnung (42A) in Strömungsverbindung steht, und
einen Erwärmungsschritt zum Erwärmen der Luft in dem Zirkulationskanal unter Verwendung einer Warmlufterzeugungseinheit, auf der Flügelwurzelteilseite die angeordnet ist,
wobei in dem Zirkulierungsschritt erwärmte Luft, die in dem Erwärmungsschritt erwärmt wurde, von einem Ende eines Ausstoßrohres (44) ausgestoßen und zu dem röhrenäußeren Kanal geleitet wird, wobei das Ausstoßrohr (44) in der Flügelwurzelseitenregion angeordnet ist und kürzer als die Röhre (42) ist, wobei das eine Ende des Ausstoßrohres (44) zu dem ersten Raum (34) hin öffnet,
wobei ein Aufnahmeraum (50), der einen Strömungsverbindungskanal (52) enthält, um ein Flügelwurzelseitenende der Röhre (42) mit einem Flügelwurzelseitenende des Ausstoßrohres (44) in Strömungsverbindung zu bringen, in dem Flügelwurzelteil durch den Flügelprofilteil (26) auf der Flügelwurzelseite, eine FRP-Platte (54), die eine Grenze auf der Flügelspitzenseite definiert, und eine Metallplatte (56), die eine Grenze auf der Flügelwurzelseite bildet, ausgebildet ist,
wobei in dem Zirkulierungsschritt die Luft in dem Zirkulationskanal durch eine Zirkulationseinheit zirkuliert wird, die in dem Aufnahmeraum (50) aufgenommen ist, und
wobei in dem Erwärmungsschritt die erwärmte Luft durch eine Warmlufterzeugungseinheit erzeugt wird, die in dem Aufnahmeraum (50) aufgenommen ist.

11. Enteisungsverfahren für den Windturbinenflügel nach Anspruch 10,
wobei in dem Zirkulierungsschritt die erwärmte Luft von einem Ausstoßteil, der in der Flügelwurzelseitenregion angeordnet ist, zu der Flügelwurzelseitenregion ausgestoßen wird, und die erwärmte Luft, die von der Flügelwurzelseitenregion durch den röhrenäußeren Kanal zu der Flügelspitzenseitenregion geströmt ist, aus der Röhrenöffnung (42A) angesaugt und über den röhreninnenseitigen Kanal als Rückströmluft zu der Warmlufterzeugungseinheit geleitet wird.

12. Enteisungsverfahren für den Windturbinenflügel nach Anspruch 10 oder 11,
wobei das eine Ende des Ausstoßrohres (44) zu der Flügelwurzelseitenregion des ersten Raumes (34) hin öffnet und das andere Ende des Ausstoßrohres (44) über den Strömungsverbindungskanal (52) mit der Röhre (42) verbunden ist,
wobei der erste Raum (34) mit dem zweiten Raum (36) auf einer Seite in Strömungsverbindung steht, die näher bei der Flügelwurzel liegt als ein Flügelwurzelseitenende des Schersteges, und
wobei in dem Zirkulierungsschritt die erwärmte Luft von dem einen Ende des Ausstoßrohres (44) zu dem röhrenäußeren Kanal ausgestoßen wird, wobei das eine Ende des Ausstoßrohres (44) auf einer Seite angeordnet ist, die näher bei der Flügelspitze (24) liegt als das Flügelwurzelseitenende des Schersteges (32).

13. Enteisungsverfahren für den Windturbinenflügel nach einem der Ansprüche 10 zu 12, ferner umfassend:
einen Dränageschritt zum Abfließen von Taukondensationswasser, das sich in dem ersten Raum (34) gebildet hat, in dem Zirkulierungsschritt aus einem Dränageloch (60), das in dem Windturbinenflügel (2) ausgebildet ist.

## Revendications

1. Pale d'éolienne, comprenant:
une partie de profil aérodynamique (26) s'étendant entre une partie de pied de pale (22) et une partie de bout de pale (24) ;
une âme de cisaillement (32) prévue dans une direction longitudinale de la pale d'éolienne (2) pour diviser un espace intérieur de la partie de profil aérodynamique (26) en un premier espace (34) sur un côté de bord d'attaque et un deuxième espace (36) sur un côté de bord de fuite ; et
un appareil de dégivrage pour enlever de la glace attachée sur le bord d'attaque (28), l'appareil de dégivrage comprenant :
un tuyau (42) prévu à l'intérieur du premier espace (34) et s'étendant jusqu'à une zone du côté bout de pale depuis une zone du côté pied de pale dans le premier espace (34), le tuyau ayant une ouverture de tuyau (42A) disposée dans la zone du côté bout de pale ;
une unité de circulation pour former un écoulement de circulation d'air dans un passage de circulation qui comprend un passage d'intérieur de tuyau formé à l'intérieur du tuyau (42) et un passage d'extérieur de tuyau formé par une zone à l'extérieur du tuyau (42) dans le premier espace (34) et en communication avec le passage d'intérieur de tuyau par l'intermédiaire de l'ouverture de tuyau (42A) ;
une unité de génération d'air chaud prévue sur un côté de partie de pied de pale et configurée pour chauffer l'air s'écoulant dans le passage de circulation de façon à générer de l'air chaud ; et
un tube d'éjection (44) qui est prévu dans la zone du côté pied de pale, le tube d'éjection (44) étant plus court que le tuyau (42) et ayant une première extrémité s'ouvrant sur le premier espace (34) et qui est configurée pour éjecter l'air chaud depuis ladite première extrémité ;
dans laquelle le passage de circulation est configuré pour diriger l'air chaud vers le passage d'extérieur de tuyau,
dans laquelle un espace de réception (50) est formé dans la partie de pied de pale (22), l'espace de réception (50) recevant l'unité de circulation et l'unité de génération d'air chaud,
dans laquelle l'espace de réception (50) comprend un passage de communication (52) pour faire communiquer une extrémité du côté pied de pale du tuyau (42) avec une extrémité du côté pied de pale du tube d'éjection (44),
la pale d'éolienne étant **caractérisée en ce que** l'espace de réception (50) est formé par la partie de profil aérodynamique (26) sur le côté de pied de pale, une plaque de matière plastique renforcée de fibre (54) qui définit une limite sur le côté de bout de pale, et une plaque de métal (56) qui forme une limite sur le côté de pied de pale.

2. Pale d'éolienne selon la revendication 1,
dans laquelle le tuyau (42) est configuré pour aspirer par l'intermédiaire de l'ouverture de tuyau (42A) l'air chaud qui s'est écoulé à travers le passage d'extérieur de tuyau jusqu'à la zone du côté bout de pale depuis la zone du côté pied de pale et pour diriger l'air chaud aspiré comme air de retour vers l'unité de génération d'air chaud par l'intermédiaire du passage d'intérieur de tuyau, et
dans laquelle une section transversale du passage d'extérieur de tuyau diminue depuis la zone du côté pied de pale vers la zone du côté bout de pale.

3. Pale d'éolienne selon la revendication 2, comprenant en outre :
un passage de communication (52) prévu dans un espace de réception (50) formé dans la partie de pied de pale (22) pour faire communiquer le tuyau (42) avec le tube d'éjection (44),
dans laquelle l'unité de génération d'air chaud comprend un dispositif de chauffage (48) qui est prévu dans le passage de communication (52) et reçu dans l'espace de réception (50), et
dans laquelle l'unité de circulation comprend un ventilateur d'aspiration (46) qui est prévu sur un côté amont du dispositif de chauffage (48) dans le passage de communication (52) et reçu dans l'espace de réception (50).

4. Pale d'éolienne selon la revendication 3,
dans laquelle la plaque de métal (56) est fixée entre la partie de pied de pale (22) de la pale d'éolienne (2) et un moyeu (4) d'une génératrice d'éolienne sur lequel la pale d'éolienne (2) est montée.

5. Pale d'éolienne selon la revendication 3 ou la revendication 4,
dans laquelle ladite première extrémité du tube d'éjection (44) s'ouvre sur la zone du côté pied de pale du premier espace (34) et l'autre extrémité du tube d'éjection (44) est reliée au passage de communication (52),
dans laquelle le premier espace (34) communique avec le deuxième espace (36) sur le côté de partie de pied de pale par rapport à une extrémité du côté pied de pale de l'âme de cisaillement (32), et
dans laquelle ladite première extrémité du tube d'éjection (44) est disposée sur le côté de partie de bout de pale par rapport à l'extrémité du côté pied de pale de l'âme de cisaillement (32).

6. Pale d'éolienne selon la revendication 5,
dans laquelle une encoche (33) est prévue au niveau de l'extrémité du côté pied de pale de l'âme de cisaillement (32), et
dans laquelle ladite première extrémité du tube d'éjection (44) est disposée du côté de partie de bout de pale par rapport à l'encoche (33).

7. Pale d'éolienne selon l'une quelconque des revendications 1 à 6,
dans laquelle une section transversale du passage d'intérieur de tuyau est plus petite qu'une section transversale du passage d'extérieur de tuyau.

8. Pale d'éolienne selon l'une quelconque des revendications 1 à 7,
dans laquelle le premier espace (34) est séparé par une âme de cisaillement du côté bord d'attaque d'un deuxième espace disposé sur le côté de bord de fuite de l'âme de cisaillement du côté bord d'attaque, l'âme de cisaillement du côté bord d'attaque (32A) étant la plus proche du bord d'attaque (28) parmi une pluralité d'âmes de cisaillement (32A, 32B) prévues dans la pale d'éolienne (2).

9. Pale d'éolienne selon l'une quelconque des revendications 1 à 8, comprenant en outre :
un trou de purge (60) pour l'évacuation de l'eau de condensation de rosée générée dans le premier espace (34).

10. Procédé de dégivrage pour une pale d'éolienne qui comprend une partie de profil aérodynamique (26) s'étendant entre une partie de pied de pale et une partie de bout de pale, et une âme de cisaillement (32) prévue dans une direction longitudinale de la pale d'éolienne (2) pour diviser un espace intérieur de la partie de profil aérodynamique (26) en un premier espace (34) sur un côté de bord d'attaque et un deuxième espace (36) sur un côté de bord de fuite, le procédé de dégivrage comprenant :
une étape de circulation pour faire circuler de l'air dans un passage de circulation comprenant : un passage d'intérieur de tuyau formé à l'intérieur d'un tuyau (42) qui s'étend dans le premier espace (34) depuis une zone du côté pied de pale jusqu'à une zone du côté bout de pale et qui a une ouverture de tuyau (42A) disposée dans la zone du côté bout de pale ; et un passage d'extérieur de tuyau formé dans une zone à l'extérieur du tuyau (42) dans le premier espace (34) et qui communique avec le passage d'intérieur de tuyau par l'intermédiaire de l'ouverture de tuyau (42A) ; et
une étape de chauffage pour chauffer l'air dans le passage de circulation en utilisant une unité de génération d'air chaud prévue sur le côté de partie de pied de pale,
dans lequel, dans l'étape de circulation, de l'air chaud qui est chauffé dans l'étape de chauffage est éjecté d'une première extrémité d'un tube d'éjection (44) et dirigé vers le passage d'extérieur de tuyau, le tube d'éjection (44) étant prévu dans la zone du côté pied de pale et étant plus court que le tuyau (42), ladite première extrémité du tube d'éjection (44) s'ouvrant sur le premier espace (34),
dans lequel un espace de réception (50) comprenant un passage de communication (52) pour faire communiquer une extrémité du côté pied de pale du tuyau (42) avec une extrémité du côté pied de pale du tube d'éjection (44) est formé dans la partie de pied de pale par la partie de profil aérodynamique (26) sur le côté de pied de pale, une plaque de matière plastique renforcée de fibre (54) qui définit une limite sur le côté de bout de pale, et une plaque de métal (56) qui forme une limite sur le côté de pied de pale,
dans lequel, dans l'étape de circulation, l'air est amené à circuler dans le passage de circulation par une unité de circulation reçue dans l'espace de réception (50), et
dans lequel, dans l'étape de chauffage, l'air chaud est généré par une unité de génération d'air chaud reçue dans l'espace de réception (50).

11. Procédé de dégivrage pour la pale d'éolienne selon la revendication 10,
dans lequel, dans l'étape de circulation, l'air chaud est éjecté vers la zone du côté pied de pale depuis une partie d'éjection disposée dans la zone du côté pied de pale et l'air chaud qui s'est écoulé à travers le passage d'extérieur de tuyau jusqu'à la zone du côté bout de pale depuis la zone du côté pied de pale est aspiré depuis l'ouverture de tuyau (42A) et dirigé comme air de retour vers l'unité de génération d'air chaud par l'intermédiaire du passage d'intérieur de tuyau.

12. Procédé de dégivrage pour la pale d'éolienne selon la revendication 10 ou 11,
dans lequel ladite première extrémité du tube d'éjection (44) s'ouvre sur la zone du côté pied de pale du premier espace (34) et l'autre extrémité du tube d'éjection (44) est reliée au tuyau (42) par l'intermédiaire du passage de communication (52),
dans lequel le premier espace (34) communique avec le deuxième espace (36) sur un côté plus près du pied de pale qu'une extrémité du côté pied de pale de l'âme de cisaillement, et
dans lequel, dans l'étape de circulation, l'air chaud est éjecté vers le passage d'extérieur de tuyau depuis ladite première extrémité du tube d'éjection (44), ladite première extrémité du tube d'éjection (44) étant disposée sur un côté plus proche du bout de pale (24) que l'extrémité du côté pied de pale de l'âme de cisaillement (32).

13. Procédé de dégivrage pour la pale d'éolienne selon l'une quelconque des revendications 10 à 12, comprenant en outre :
une étape de purge pour évacuer l'eau de condensation de rosée générée dans le premier espace (34) dans l'étape de circulation par un trou de purge (60) formé dans la pale d'éolienne (2).
